Europäisches Patentamt

European Patent Office

Office européen des brevets

(11) Publication number: **0 376 611**
**A2**

## EUROPEAN PATENT APPLICATION

(21) Application number: 89313379.3

(22) Date of filing: 20.12.89

(51) Int. Cl.5: **G01N 27/26**

(30) Priority: 30.12.88 US 292409

(43) Date of publication of application:
04.07.90 Bulletin 90/27

(84) Designated Contracting States:
CH DE FR GB IT LI SE

(71) Applicant: **THE BOARD OF TRUSTEES OF THE LELAND STANFORD JUNIOR UNIVERSITY**
**857 Serra Street 2nd Floor**
**Stanford California 94305-6225(US)**

(72) Inventor: **Kovacs, Gregory T.A.**
**275 Hawthorne, Apt. 118**
**Palo Alto California 94301(US)**
Inventor: **Holland, Kric C.**
**338 Roble Avenue No. 2**
**Menlo Park California 94026(US)**

(74) Representative: **Whalley, Kevin et al**
**MARKS & CLERK 57/60 Lincoln's Inn Fields**
**London WC2A 3LS(GB)**

(54) Electrophoretic system.

(57) An electrophoretic device (20, 40, 50, is disclosed which is fabricated in a silicon wafer with many microscopic trenches (24, 44, 54) on its surface. The trenches are preferably covered by a cover (26, 46) so that the trenches can hold an electrolyte and an electrophoretic sample. Control circuits can be conveniently fabricated on the wafer as well. The control circuit is then used for applying electric fields to the trenches in an electophoretic process to separate the sample into its components. An electrophoretic method is also disclosed which is applicable to a device with a source and a sink electrode and at least a third electrode in or adjacent to the source. The third electrode is arranged transverse to the direction for applying voltages to the source and sink. Voltages are applied to the electrodes so that the third electrode is at a higher or lower potential than the source and sink electrodes to attract charged sample components to their vicinity. Subsequently a different set of voltages is applied to the electrodes so that the sample components in the vicinity of the third electrode move towards the sink.

FIG._1.

# ELECTROPHORETIC SYSTEM

This application relates in general to electrophoretic systems and in particular to an electrophoretic system with improved qualities for separation and detection of substances.

Electrophoresis has become an important technique for the separation and analysis of charged substances, especially biopolymers. Polymer gels have been used as the separation medium. Such gels are such that convection and flow which would otherwise disrupt separations are reduced. However, electrophoretic systems employing gels do not lend themselves to simple on demand applications.

Capillary zone electrophoresis (CZE) in small capillaries has also been developed as an alternative to gel-type electrophoretic systems. An electric field is applied between the two ends of a capillary tube into which an electrolyte containing an electrophoretic sample is introduced. The electric field causes the electrolyte and the sample to flow through the tube. Some components in the sample will have higher electrokinetic mobilities than other components so that the sample components are resolved into zones in the capillary tube during the flow of the electrolytes and the sample through the capillary.

Conventional CZE techniques are limited in resolving power by the ratio of the circumference of the capillary to the cross-sectional area of the capillary. For a cylindrical tube, this ratio is inversely proportional to the radius of the tube. This has led to the development of extremely small bore glass tubes which may be difficult to manufacture.

For these and other reasons explained below, the above described electrophoretic techniques are not entirely satisfactory. It is therefore desirable to provide an electrophoretic system with improved qualities and performance.

This invention is based on the observation that, instead of using glass tubes, microscopic trenches can be fabricated in a substrate such as a silicon wafer using semiconductor processing techniques. The microscopic trenches so fabricated can be made to have very small cross-sectional dimensions. This invention is also based on the observation that, by using a semiconductor substrate for the electrophoretic channels, incorporation of electrodes, detectors and signal processing circuitry in the substrate enables electric fields at different points in the trenches to be directly controlled and physical parameters detected to improve the versatility and performance of the electrophoretic system.

One aspect of the invention is directed towards an electrophoretic device comprising a substrate having at least one trench and a cover adapted to contact said surface to cover the trench forming an elongated space. The space is suitable for holding an electrolyte and an electrophoretic sample having one or more components during an electrophoretic process. The device further comprises means for applying to the trench an electric field to move the electrolyte and the sample through the trench and separate the sample into its components.

Another aspect of the invention is directed towards an electrophoretic device comprising a medium suitable for passage of a sample along a predetermined direction between a source and a sink during an electrophoretic process. The sample has one or more components. The device further comprises means for applying to the medium electric fields at the source and sink and at at least one point between the source and sink to move the components along said direction and to separate the sample into its components.

Yet another aspect of the invention is directed towards an electorphoretic method employing a device where the device includes (a) a medium suitable for passage of a sample along a predetermined direction between a source and a sink during an electrophoretic process, said sample having one or more components; and (b) a source electrode and a sink electrode and at least a third electrode in or adjacent to the medium and arranged transverse to the direction for applying voltages to the source and sink, wherein the third electrode applies a voltage to the medium at a point adjacent to the source, and (c) means for applying voltages to the electrodes. The method comprises (i) applying a first set of voltages to the electrodes so that the third electrode is at a higher or lower potential than the source and sink electrodes to attract charged sample components to the vicinity of the third electrode, and (ii) subsequently applying a second set of voltages to the electrodes so that sample components in the vicinity of the third electrode move towards the sink.

A further aspect of this invention is directed towards an electrophoretic method employing a device. The device includes (a) a medium suitable for passage of a sample along a predetermined direction between a source and a sink during an electrophoretic process, said sample having one or more components, (b) an array of electrodes in or adjacent to the medium and arranged transverse to the direction for applying voltages to the source and sink and points in the medium between the source and sink, and (c) means for applying voltages to the electrodes. The method comprises the following steps. In the first step, voltages are applied to the electrodes so that for a first group of adjacent electrodes, the electrode closest to the source defining the first electrode is at a higher or lower potential than the remaining electrodes in the first group to attract a component of the sample from the source to a point in the medium in the vicinity of said first electrode. In the second step the voltage applied to the electrode immediately adjacent to the first electrode defining the second electrode is changed so that the potential of the second electrode tends to follow that of the first during the first step to attract the component attracted towards the first electrode during the first step towards a part of the medium in the vicinity of the second electrode. In the third step the voltage applied to the electrode which is immediately adjacent the second electrode and different from the first electrode defining the third electrode is changed so that the potential of the third electrode tends to follow that of the second electrode during step two to attract the component attracted towards the second electrode during step two towards a part of the medium in the vicinity of the third electrode. In the fourth step, at a predetermined time after step one, the voltage applied to the first electrode is changed to prevent the component from diffusing back towards the vicinity of the first electrode. The component is thereby moved sequentially from the source towards the vicinity of the first electrode, of the second electrode and of the third electrode and therefore moved towards the sink.

Fig. 1 is a cross-sectional view of a portion of a microelectrophoretic array to illustrate an embodiment of the invention.

Fig. 2 is a cross-sectional view of a portion of a microelectrophoretic array to illustrate a second embodiment of the invention.

Fig. 3A is the top view of a microelectrophoretic device showing the layout of microchannels and a starting electrode to illustrate the invention.

Figs. 3B, 3C are the top views of microelectrophoretic devices showing alternative layouts of microchannels to illustrate the invention.

Figs. 4A-4D are side views of an electrophoretic device to illustrate the invention.

Fig. 5 is the top view of an electrophoretic device with multiple electrodes to illustrate the invention.

Fig. 6A is a partly cross-sectional and partly schematic view of an electrophoretic device to illustrate the invention.

Fig. 6B shows voltage waveforms applied to the electrodes of Fig. 6A to illustrate the invention.

Fig. 7 illustrates the effect of one set of voltages applied to a set of electrodes in an electrophoretic device on an electrophoretic sample in the device to illustrate the invention.

Fig. 8A illustrates the effect of another set of voltages applied to a set of electrodes in an electrophoretic device on a sample in the device to illustrate the invention. Fig. 8B is a block diagram of a binary counter type circuit suitable for driving the multiple electrodes in Figs. 6A, 6B, 7 and 8A.

Fig. 9 is the top view of an electrophoretic device employing a conventional electrophoretic gel as the separation medium to illustrate the invention.

Fig. 10 is the top view of an electrophoretic device with multiple electrodes and employing a conventional electrophoretic gel to illustrate the invention.

Fig. 11 is the top view of an electrophoretic device with a detector to illustrate the invention.

Fig. 12 is the top view of an electrophoretic device with a plurality of detectors to illustrate the invention.

Fig. 13 is a partly schematic and partly cross-sectional view of a portion of an electrophoretic device to illustrate the invention.

Fig. 14 is a perspective view of a microelectrophoretic device to illustrate how an external detector may be coupled to a microelectrophoretic device to illustrate the invention.

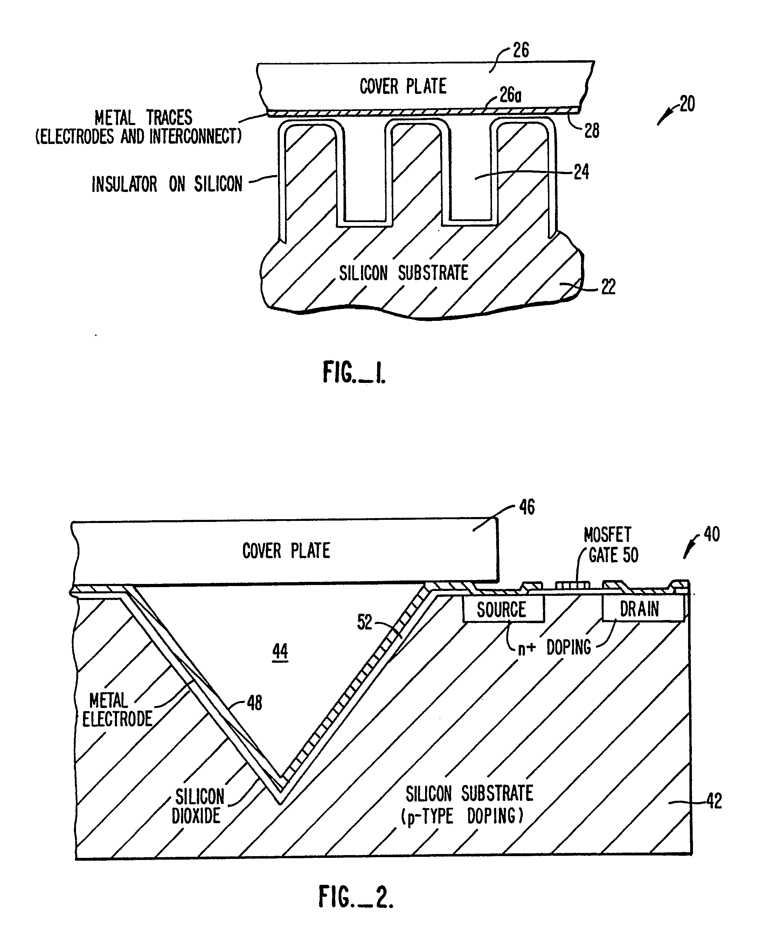

Fig. 1 is a cross-sectional view of a portion of a microelectrophoretic device to illustrate the invention. As shown in Fig. 1, device 20 includes a substrate which preferably is a material to which conventional semiconductor processing techniques can be applied. In one embodiment the substrate 22 is composed of silicon. The starting material for making device 20 may therefore be a silicon wafer. A "wet" oxide ($SiO_2$) is grown on the wafer in a steam-filled furnace at approximately $1000\degree$ C. to coat the wafer. This oxide layer is handy for process monitoring but is not strictly necessary. Photoresist is then applied to the top surface of the wafer which is then patterned photolithographically with the desired pattern for one or more trenches. The oxide in the exposed part of the pattern is then plasma or reactive ion etched using one of several plasma chemistry (for example, but not limited to chlorine) down to the bare silicon. At this point the trenches are plasma etched using fluorine chemistry (but not limited to this approach, as other plasma chemistries or wet chemical etching can be used successfully). By varying the etching time, reactant gas composition, concentration, total pressure and R.F. power applied, the depths of the trenches can be varied. The next step is the oxidation of the trench sidewalls (again via wet oxide growth, or coating with some other material as discussed below). The oxide layer or coating of other material on the silicon serves as an insulator insulating the silicon electrically from the contents of the trenches 24.

In some electrophoretic applications, trenches 24 need not be covered. This is true particularly where trenches 24 are narrow and deep in cross-section. Where the trenches are not covered, electric fields can still be applied to the contents in the trenches through electrodes and electrical circuitry fabricated in the substrate 22 as described below in reference to Fig. 2. Preferably, however, the trenches 24 are covered by a cover plate 26 as shown in Figs. 1 and 2. Plate 26 may be made of Pyrex glass or any other insulating material. Metal traces 28 may be deposited on the inside surface 26a of the plate to apply electric fields to the contents of the trenches. The trenches may be filled with an electrophoretic medium such as phosphate buffered saline or, in some instances, conventional electrophoretic media such as polyacrylamide gels. Preferably the dimensions of the trenches in directions substantially perpendicular to the direction of flow do not exceed 100 microns in any direction.

By utilizing semiconductor processing techniques to fabricate the trenches in silicon, it is possible to fabricate trenches which are very narrow. When these trenches are used as channels in capillary electrophoretic processes, the resolving power of the electrophoretic process is much improved since the microscopic trenches provide a much increased ratio of the surface area to the cross-sectional area. Furthermore, since the width of the trenches can be made to be on the order of several microns, trenches of several centimeters in length are frequently sufficient for separating a sample electrophoretically into its components. For this reason the entire electrophoretic device may be placed on a silicon chip. This results in an inexpensive and disposable sequencing chamber, ideal for medical office use. Since DNA analysis is expected to become a day-to-day medical test in the near future, device 20 makes it possible for such analysis to be performed conveniently in medical offices.

Furthermore, if substrate 20 is made of a semiconductor material such as silicon, it is possible to incorporate electrodes, detectors and signal processing circuitry on the substrate to apply electric fields to electrophoretic samples in the trenches and for detection of components. The ability to incorporate electrodes, detectors and signal processing circuitry directly on the substrate permits accurate control of electric fields and of detection along the length of the trenches. This makes it possible to discriminate between molecules that differ only slightly in their charge, mobility or other electrophoretic characteristics. This ability will be of great use in the sequencing of DNA, RNA and proteins, as this depends on the ability to resolve differences between macromolecules which account for only a small percentage of their mass.

Since thousands of trenches can be fabricated in a silicon chip, the outflows of the trenches can be merged. This eliminates one of the major problems with capillary tube electrophoresis which is the small volumes that can be separated.

Fig. 2 is a cross-sectional view of a portion of a microelectrophoretic device 40 to illustrate another embodiment of the invention. As shown in Fig. 2, device 40 includes a semiconductor substrate 42 into which one or more trenches 44 have been fabricated, and a cover plate 46 for covering the trenches. As also shown in Fig. 2, a metal trace serving as a metal electrode 48 and a MOSFET 50 (metal oxide semiconductor field effects transistor) have been fabricated on or in substrate 42. Alternatively, a bipolar junction transistor may also be used for transistor 50. Metal electrode 48 is separated from the substrate by a layer of insulating material such as silicon dioxide 52 and, overcoated with an alkali blocking insulating (or passivation) layer in every location except the electrodes and external contact points to prevent these ions (which may be present in the sample) from diffusing into and interfering with the operation of the MOS transistors. It will be noted that trench 44 has a V-shaped cross-section. Such V-grooves can be obtained by a variety of etching techniques such as wet chemical etching using KOH.

Once the grooves are etched, an insulator (preferably silicon dioxide if MOSFETs are to be fabricated on the same substrate) is deposited or grown over them. From this point, conventional MOS fabrication techniques can be applied to produce active transistors such as transistor 50 on the same substrate. One or more metal traces 48 can then be deposited into the grooves and connected to the transistors using conventional fabrication techniques. The V-shaped cross-section of the trench 44 provides a shallower slope than the vertical wall of trench 24 of Fig. 1; this helps the deposited metal to conform continuously to the sidewalls. Thus, switching of voltages at electrode 48 can be accomplished through MOSFET 50 and other on-chip electronics (not shown). Since the control circuit and electrodes are incorporated as part of the substrate, the passive cover plate 46 may be omitted as noted above. In such event, the shape of the groove may need to be altered to be deep and narrow, and the unit operated in a controlled environment such as one of high humidity.

Anodic bonding of glass cover plates to silicon wafers have been performed. Such technique is described, for example, in:

1. "A Gas Chromatographic Air Analyzer Fabricated on a Silicon Wafer" by Terry, Jerman and Angell, IEEE Transactions on Electron Devices, Vol. ED-26, No. 12, December 1979, pp. 1880-1886.

2. Pomerantz, D.I., United States Patent #3,397,278, Anodic Bonding, Issued August 13, 1968.

3. Wallis, G., Field Assisted Glass Sealing, Electrocomponent Science and Technology, Vol. 2, No. 1, 1975, pp. 45-53.

4. Wallis, G., and Pomerantz, D.I., Field Assisted Glass-Metal Sealing, Journal of Applied Physics, Vol. 40, No. 10, September 1969, pp. 3946-3949.

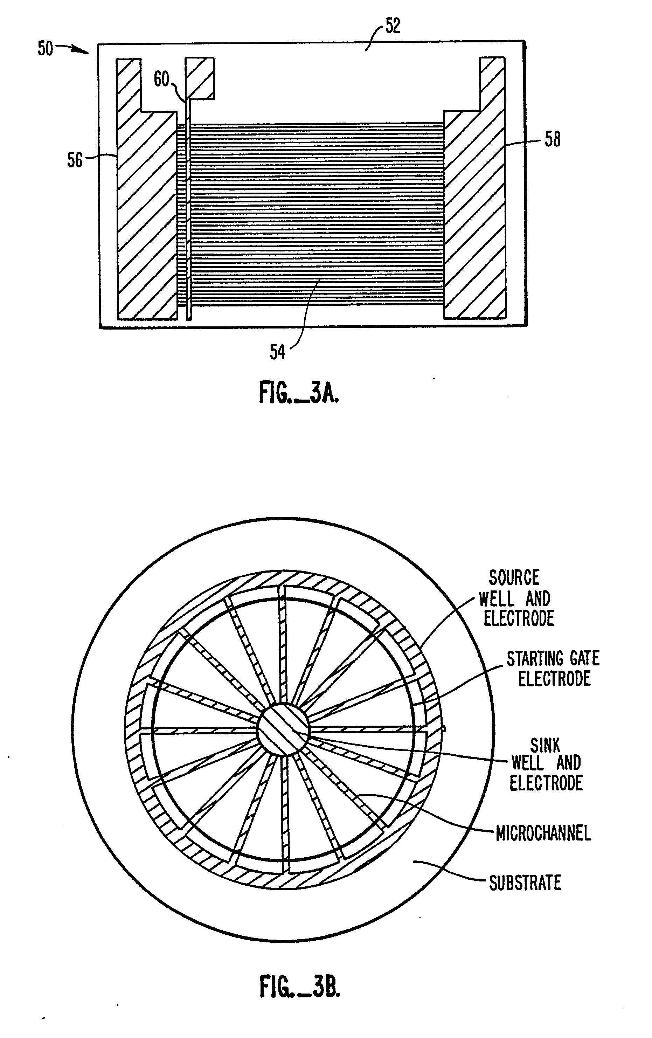

Fig. 3A is the top view of a microelectrophoretic device showing the layout of the trenches in the device and a starting electrode to illustrate the invention. As shown in Fig. 3A, electrophoretic device 50 includes a substrate 52 into which a number of trenches 54 have been etched. Trenches 54 may take on the cross-sectional shapes of trenches 24, 44 of Figs. 1 and 2 or any other shape that can be fabricated. As shown in Fig. 3A, trenches 54 are substantially parallel to one another and they connect a source well 56 and a sink well 58. Thus an electrolyte and an electrophoretic sample are placed in source well 56. An electric field is applied between the source well and the sink well through source and sink electrodes (not shown) to move the electrolyte and sample through the microchannels or trenches 54 towards the sink well. Due to the differences in charge and mobility of the different components of the electrophoretic sample, these components will separate during their movements through microchannels 54 towards the sink well 58. Thus even though the microchannels 54 may have very small cross-sections so that each channel can process only a small amount of the electrolyte and sample, the outflows of the microchannels are merged in sink well 58 so that the small cross sections of the microchannels are no obstacle for processing a sizeable electrophoretic sample.

Fig. 3B is the top view of a microelectrophoretic device showing an alternative layout of microchannels and electrodes to illustrate the invention. Instead of being in parallel, the microchannels 54' can be arranged in the shapes of "spokes" in a "wagon-wheel" arrangement, connecting a large ring-shaped source well 56' to a central sink will 58' at the axis of the "wheel". Alternatively, the well at the center of the "wheel" may instead be the source well and the ring-shaped well may instead be the sink well. Alternatively, to maximize the length of the channel or channels, they could be in the shape of a spiral pattern, wherein the source will is located at or near the periphery of the spiral and the sink well is located at the center of the spiral. Two or more spiral shaped trenches sharing the same source and sink wells and running substantially alongside one another may be implemented. A single spiral trench has been implemented for use as a gas chromatographic air analyser as described in reference No. 1 by Terry et al. above. All such and other arrangements of the microchannels and the source and sink wells are within the scope of the invention.

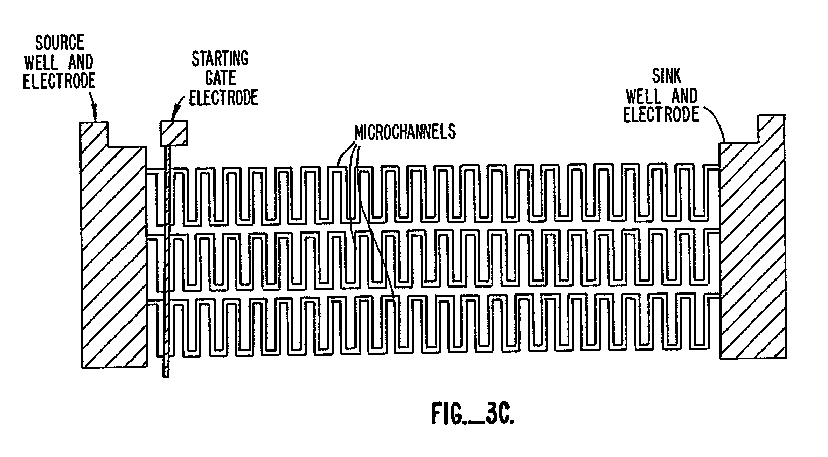

Fig. 3C is the top view of a microelectrophoretic device showing yet another alternative layout of microchannels arranged in a serpentine pattern to illustrate the invention. Such layout permits a much longer electrophoretic channel to be fabricated on a smaller area than otherwise possible. Winding or meandering patterns other than that shown in Fig. 3C may also be used and are within the scope of the invention.

It is known in the electrophoretic art that undesirable zone broadening is caused by Joule heating, eddy migration and simple molecular diffusion. Thus the passage of current through the buffer medium may heat up the buffer, causing disruptive convective flows. It is also known that the use of capillary tubes, particularly small diameter tubes, reduces zone broadening. Decreasing the capillary diameter serves to increase the surface-to-volume ratio, and increase the efficiency of heat dissipation. Furthermore, decreasing the capillary diameter increases the electrical resistance of the buffer or electrolyte and reduces the current between the source and sink; this in turn reduces power dissipation and Joule heating of the electrolyte. Since the microchannels in the substrate of this invention can be made with smaller cross-sections than even the presently available capillary tubes, the device of this invention is advantageous in reducing zone broadening.

As discussed below, one or more electrodes may be fabricated along the length of each microchannel. This allows flexible and accurate control of electric fields along each section of the microchannels. Such capability permits the application of techniques that further impede the disruptive processes causing zone broadening.

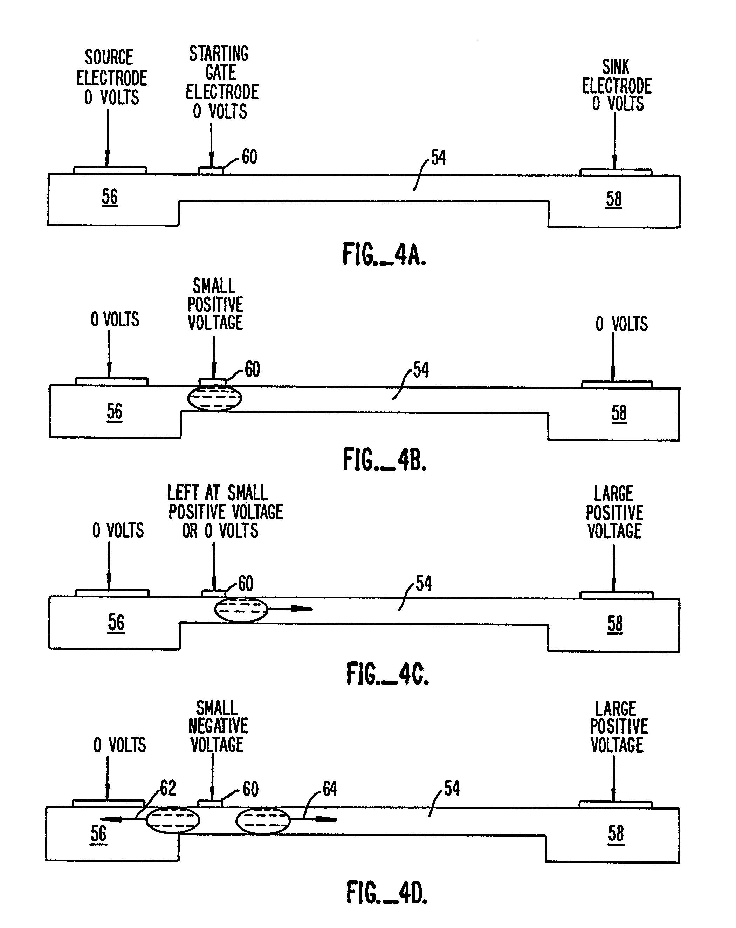

Figs. 4A-4D are side views of an electrophoretic device showing the response of ions in the channels to the application of voltages to illustrate the invention. In reference to Fig. 3, a "starting gate" electrode 60 is fabricated either as part of the substrate as shown in Fig. 2 or on the inside surface of the cover plate as in Fig. 1. While the features illustrated in reference to Figs. 3A, 4A-4D are described herein for application to microelectrophoretic devices, these same techniques are applicable to conventional electrophoretic devices of ordinary size; all such applications are within the scope of the invention.

Starting gate 60 is a thin trace of metal fabricated in a position near the sample source well, transverse to and preferably perpendicular to the channels and therefore to the direction of travel of the ions.

In reference to Figs. 4A, the source well, the sink well and the starting gate are all initially at the same relative potential, which may conveniently be ground or 0 volts. An electrolyte and electrophoretic sample are deposited in source well 56. In reference to Fig. 4B, the source and sink wells are at zero potential while a small positive voltage is applied to electrode 60. This causes anions from the source well to drift towards and increase in concentration in the portion of the microchannels 54 in the vicinity of electrode 60. This provides for not only an equal starting time for all channels when the sink voltage is turned on as shown in Fig. 4C but also forms a narrow line which can be further focused as illustrated in Fig. 4D. In reference to Fig. 4D, if the starting gate is made initially positive as in this example, and then once the ion front is released (as shown in Fig. 4C), the starting electrode 60 is made more negative than the source electrode, anions which were drifting towards the starting gate are repelled back to the source indicated by arrow 62 and those which have been drawn away from it towards the sink (indicated by arrow 64) are given a further "kick" in that direction. This effectively "pinches off" a packet of ions. The starting gate can also be used to enrich dilute samples by allowing it to focus ions near it for an extended period prior to beginning the electrophoresis process.

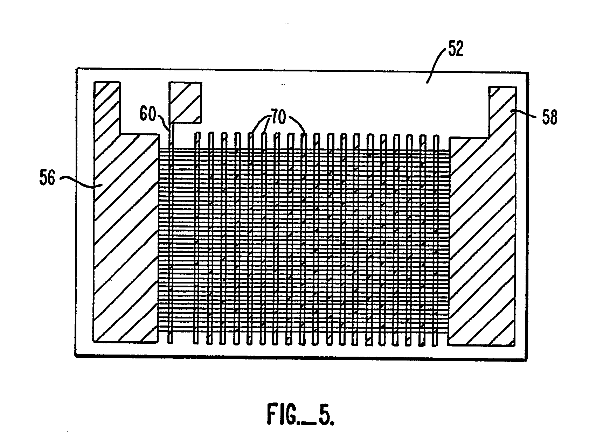

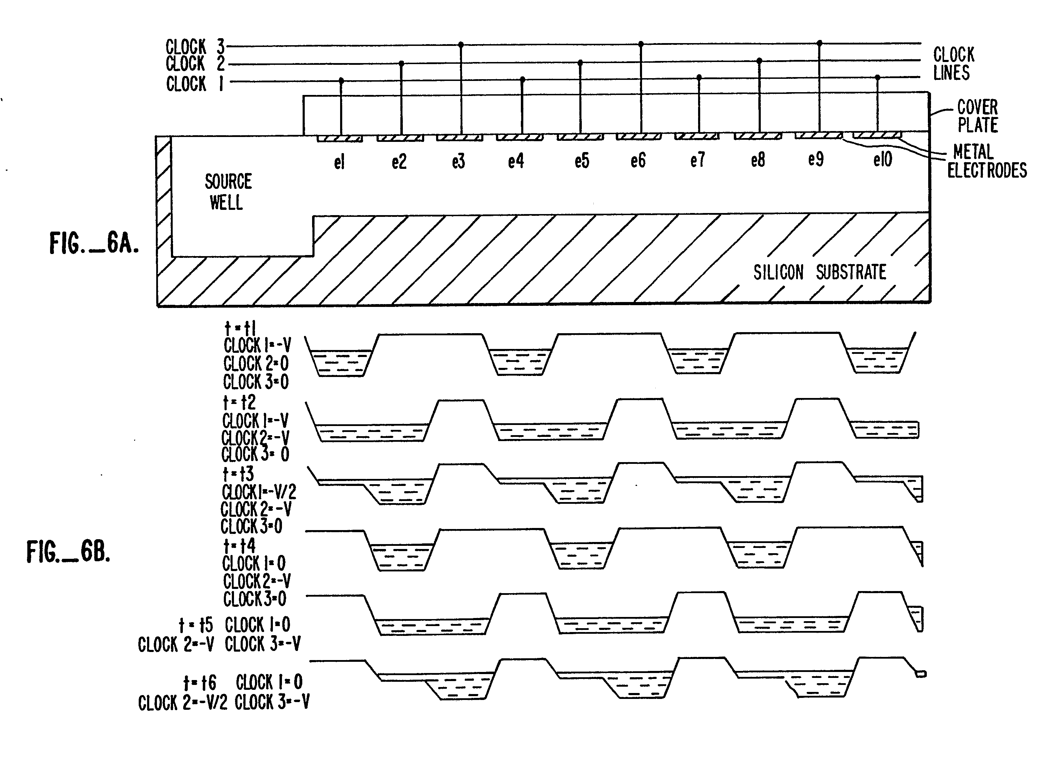

As described above, a common problem with conventional electrophoresis is zone broadening or blurring between components of the sample which are to be separated. One of the causes of zone broadening or blurring is simple molecular diffusion. As discussed above in reference to Figs. 3A, 4A-4D, it is possible, by applying an appropriate sequence of voltages to the source and sink and starting gate electrodes, to focus a packet of ions or molecules near the starting gate electrode to counter such diffusion. Fig. 5 is a top view of a microelectrophoretic device with a multiple electrode array which may be used to continuously focus the ions or molecules in the packet to reduce the diffusion along the entire length of the microchannel. Figs. 6A, 6B illustrate this aspect of the invention in more detail.

Fig. 6A is a partly cross-sectional and partly schematic view of a microelectrophoretic device. The desirable direction of passage of ions or molecules from the source to sink (not shown) defines the downstream or upstream positions of the electrodes. Thus e2 is downstream from e1, and e6 is upstream from e8. As shown in Figs. 6A, elongated electrodes 100 are arranged in an array transverse to the microchannels where the electrodes are grouped in groups of three each. The voltages applied to the electrodes are illustrated in Fig. 6B. As shown in Figs. 6A, 6B, clock 1 controls electrodes e1, e4, e7, e10, clock 2 controls e2, e5, e8 and clock 3 controls e3, e6 and e9. At time t1, clock 1 applies a voltage of -v. This causes the positive ions or positively charged molecules in the source well and in the microchannels to be attracted to the vicinity of electrodes e1, e4, e7, e10 since these electrodes are at lower potentials than the neighboring electrodes. At a subsequent time t2, while electrodes e1, e4, e7 and e10 are maintained at -V, clock 2 also applies a voltage of -V to electrodes e2, e5 and e8. This causes the positive ions originally in the vicinity of electrodes e1, e4, e7 to move downstream in the microchannels towards the portion of the microchannels in the vicinity of electrodes e2, e5 and e8 as illustrated graphically in Fig. 6B. At a subsequent time t3, the potential of electrodes e2, e5 and e8 are maintained at -V, but the potential of electrodes e1, e4, e7 and e10 are changed to -V/2. This further accelerates the movement of ions and molecules originally attracted to the vicinity of these electrodes at time t1 to move towards portions of the channel in the vicinity of electrodes e2, e5, e8. At a subsequent time t4, the potential of electrodes e2, e5, e8 remain unchanged but the electrodes e1, e4, e7, e10 are grounded. This causes the ions or molecules originally near electrodes e1, e4, e7 to move entirely towards electrodes e2, e5 and e8.

At each of the times t1-t4, electric fields applied to the charged ions or molecules through the electrodes apply forces that counter the molecular diffusion forces and effectively focus the ions or molecules near the desired electrodes as illustrated above. Thus the ions or molecules originally concentrated beneath electrodes e1, e4, e7 at time t1 have been moved to the portion of the microchannel underneath electrodes e2, e5, e8 at time t4, where the ions or molecules remain focused into packets. Therefore the zone broadening or blurring effect caused by diffusion is reduced.

In the above described cycle, electrodes e3, e6 and e9 controlled by clock 3 were fixed at zero volts in order to prevent diffusion of ions from beneath other electrodes in the downstream direction. At time t5, clocks 2 and 3 are at -V and clock 1 applied to e1, e4 is at 0, so that the voltage pattern of t2 is repeated, but spatially shifted by one electrode downstream. At time t6, the voltage pattern of t3 is repeated, but again spatially shifted by one electrode downstream. As can be seen from the voltage patterns in Fig. 6B, for every 3 clock cycles, the voltage pattern repeats itself, but is spatially shifted by one electrode. At time t7 (not shown), clocks 1, 2, 3 are at 0, 0, -V respectively and at time t10 (not shown), clocks 1, 2, 3 are at -V, 0, 0, same as at time t1.

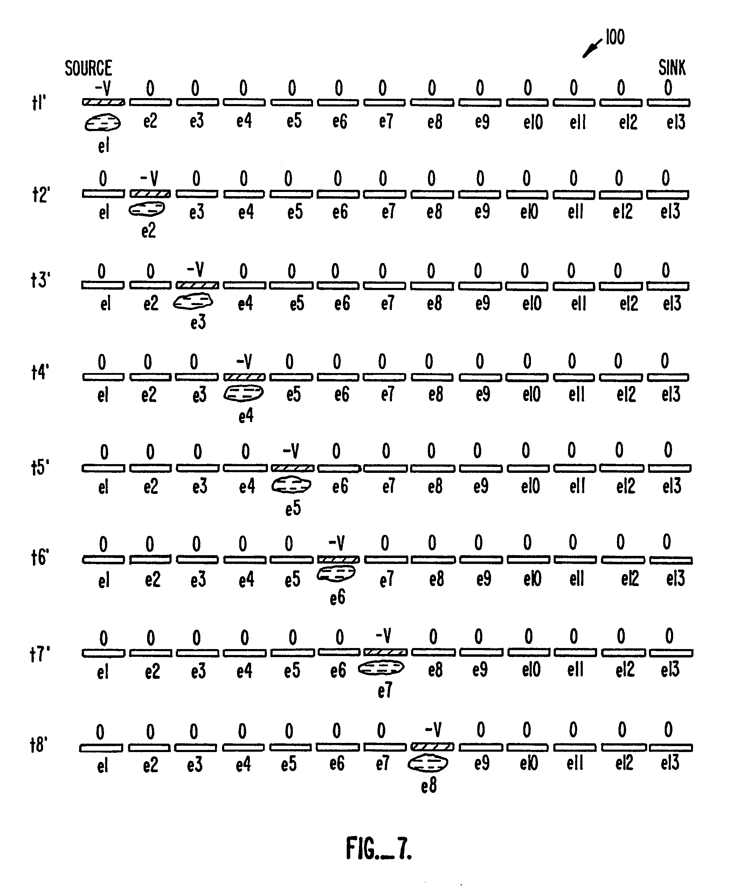

While Figs. 6A, 6B illustrate a "three-phase" implementation, this is only one of many possible configurations. Similar configurations have been described for charge-coupled devices for moving charged carriers from one point in a substrate to another point. Charge-coupled devices are described in Millman, J., Microelectronics: Digital and Analog Circuits and Systems, McGraw-Hill, Inc., New York, NY, 1979, pp. 298-312 and Sze, S.M., Physics of Semiconductor Devices, John Wiley & Sons, Inc., 1981, pp. 407-430. Obviously implementations other than a "three-phase" implementation and different voltage sequences, amplitudes, or polarities can be applied for continuous focusing and are within the scope of the invention. One example of a different implementation and voltage sequence is illustrated in Fig. 7.

Fig. 7 illustrates the voltages applied to electrodes e1-e13 in the microelectrophoretic device employing a multiple electrode array at consecutive times $t1'$-$t8'$. Thus, at time $t1'$, a voltage -V is applied to electrode e1, thereby attracting a packet of positively charged ions or molecules towards the portion of the microchannel beneath electrode e1. The remaining electrodes e2-e13 are kept grounded. At a subsequent time $t2'$, the negative voltage -V is applied to electrode e2 instead with the remaining electrodes grounded. The cations originally underneath electrode e1 are then attracted towards the portion of the microchannel below electrode e2. The negative voltage -V is shifted one electrode at a time during the subsequent times $t3'$-$t8'$ as shown in Fig. 7, thereby causing the packet of positive ions or molecules to move from underneath one electrode towards the portion of the channel underneath the next electrode in the direction of the sink.

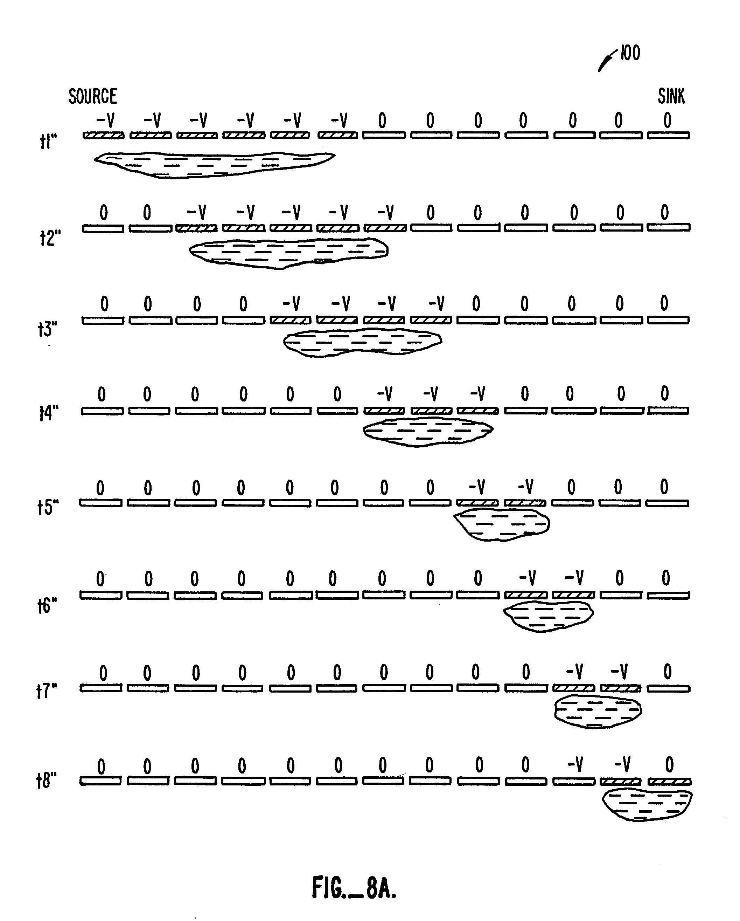

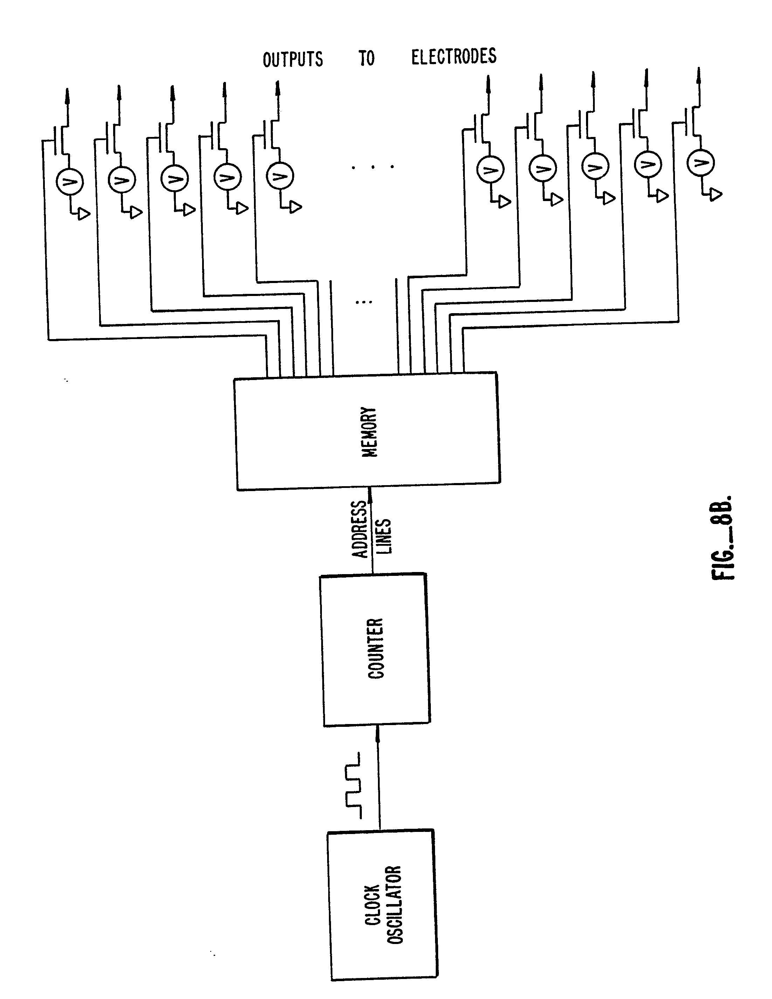

The above description of the motion of ions or molecules applies only to those components with sufficiently high mobility to keep up with the frequency of voltage shifting. Depending on the time interval between the voltage shifts, not all ions or molecules have sufficient mobility to move to the adjacent electrode within the time interval. Thus, if the time intervals between times $t1'$, $t2'$, $t3'$ are relatively short, only ions or molecules with high mobility will be able to follow the voltage shift from a location beneath e1 to a location beneath e2 and then to a location beneath e3. Ions or molecules with small mobility will tend to remain either at the source well or near electrode e1 at times $t2'$, $t3'$. Thus, by controlling the frequency of the voltage wavefront sweep, it is possible to filter out charged ions or molecules with different mobilities. The shifting voltage wavefront sweep can of course be repeated at a different part of the array of multiple electrodes. Thus in Figs. 6A, 6B, the pattern is repeated every three electrodes. In such event, the filtering of molecules or ions of different mobilities also depend upon the distance between electrodes where the pattern is repeated. Where the pattern is repeated in a dense fashion such as in Figs. 6A, 6B, it is possible also to move molecules or ions with smaller mobilities towards the sink. By increasing the sweep rate or the spacing between electrodes where the voltage pattern is repeated, it is possible to discriminate against slow moving ions or particles. For simplicity, the electrode to which the voltage -V is applied is shown as a solid rectangle in Fig. 7 whereas electrodes which are grounded are shown as hollow rectangles. The same convention is applied in Fig. 8.

As shown in Fig. 8A, the number of adjacent electrodes to which the voltage -V is applied is decreased in time as shown in Fig. 8 from time $t1''$ to $t8''$. This has the effect of focusing charged ions or molecules originally spread out across the microchannel underneath several electrodes to a small area of the microchannel underneath the smaller number of electrodes. While Fig. 8 illustrates the number of electrodes decreasing from 6 to 5 to 4 to 3 and then to 2 at time $t5''$, remaining unchanged until $t8''$, it will be understood that other monotonically decreasing functions can also be used and are within the scope of the invention. Again, the techniques described above are applicable to conventional electrophoretic devices of ordinary size. The application of different sequences of voltages to the electrodes as shown in Figs. 6A, 6B, 7 and 8 may be implemented simply by employing conventional circuitry. A typical implementation of the schemes in Figs. 6A, 6B, 7 and 8A would utilize a binary counter with N output states, one for each pattern of electrode voltages. Fig 8B is a block diagram of a binary counter type circuit suitable for driving the multiple electrodes in Figs. 6A, 6B, 7 and 8A. As shown in Fig. 8B, the outputs of the counter are used to address a solid-state memory device containing within it the appropriate signals for each electrode for each state of the counter. The aforementioned outputs of the memory are connected, via the appropriate driver circuitry, to the electrodes themselves. As the counter is clocked at the desired output state interval, the electrode activation pattern stored within the memory device is applied to the electrodes (electrodes on glass if laid on gel). Such circuitry may, as described, be integrated with the channels if the substrate is silicon.

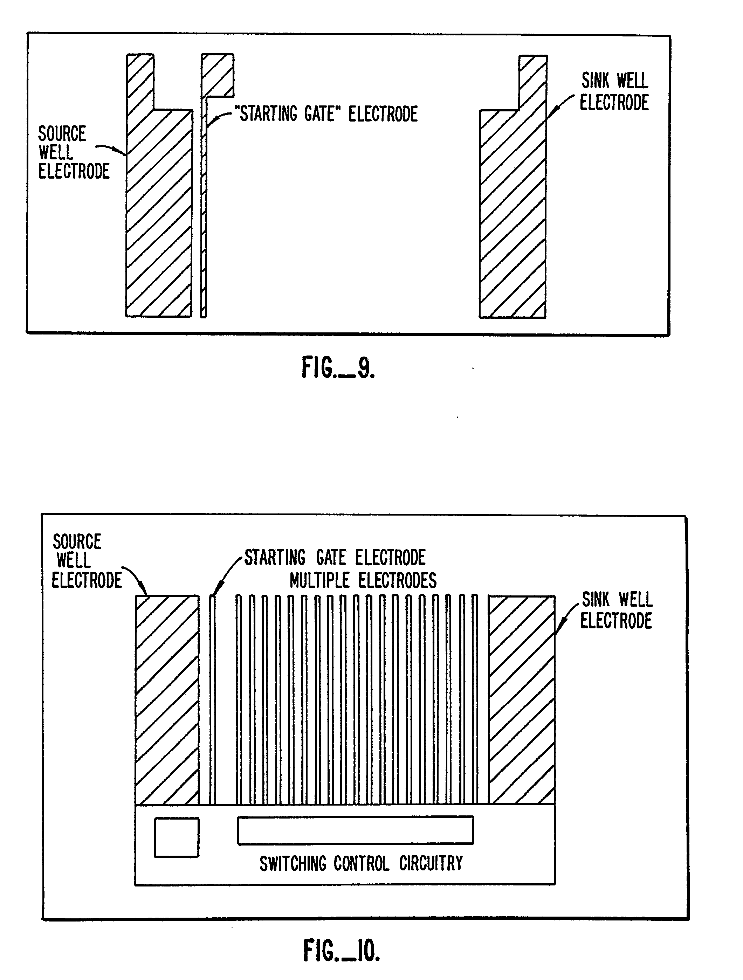

While the focusing and filtering features have been described above in reference to a microelectrophoretic device employing channels in a substrate, it will be understood that these same features can be applied to other electrophoretic mediums as well, such as a conventional electrophoresis gel. Thus the focusing feature employing a starting gate electrode in Fig. 3A can be readily modified and applied to electrophoretic device employing a gel as the medium as shown in Fig. 9. Again, ions or molecules can be focused near the starting gate electrode to provide an equal starting time for all channels in the gel, to pinch off a packet of ions and to enrich dilute samples. The above described continuous focusing and filtering techniques in the context of Figs. 6A, 6B, 7, 8 can be applied to the electrophoretic device of Fig. 10 with a multiple electrode array on top of a conventional electrophoretic gel. Such applications and other applications of the same features for other electrophoretic media such as tubes are also within the scope of the invention.

Chemical functionalization of channel walls can be carried out in a fashion analogous to that used in conventional tube electrophoresis. In other words, fixed charged and/or hydrophobic/hydrophilic groups can be attached to the walls of the walls of the trenches to obtain a desired interaction with the ions being analyzed or separated. Since the silicon dioxide side wall coating employed in one embodiment of the invention described above is essentially a glass, some techniques conventionally applied to electrophoretic tubes are adaptable. Other suitable coatings for the channel walls include silicon nitride and organic polymers.

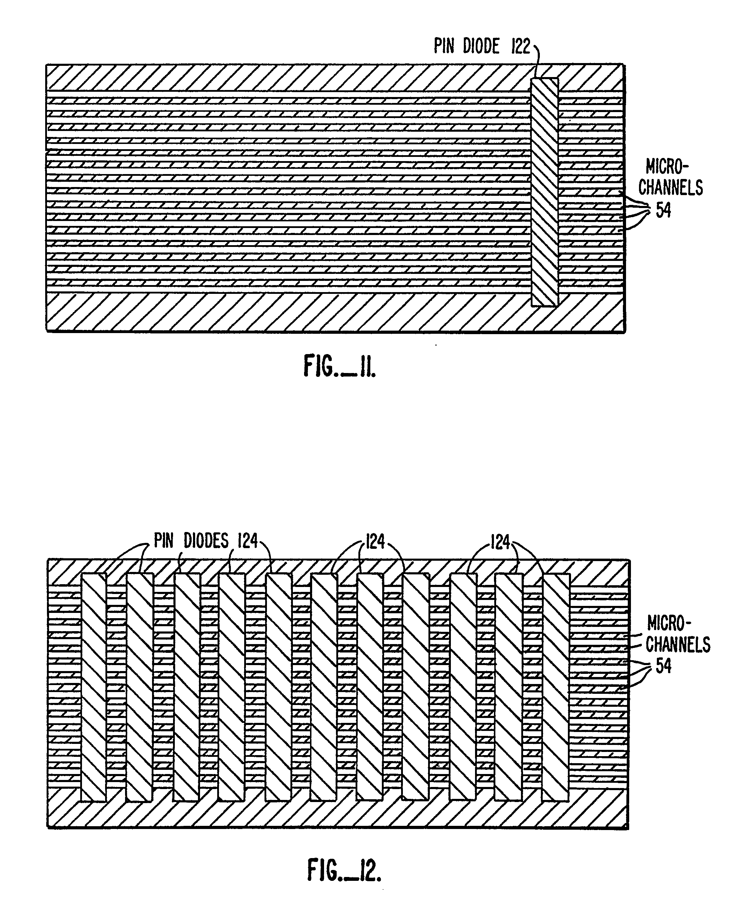

If a semiconductor substrate is used to fabricate the microchannels, it is possible to fabricate radiation detection circuitry directly on the same substrate such as arrays of P.I.N. diodes in which electron/hole pairs are generated when impinged upon by radiation particles. Such detectors have been used in particle research. Such detectors permit the detection of radioactively labelled molecules from the sample in the microchannels. Fig. 11 is a top view of a microelectrophoretic device with a detector to illustrate the invention. As shown in Fig. 11, elongated P.I.N. diode 122 is arranged to be transverse to the microchannels 54. Preferably microchannels 54 are substantially parallel to one another and diode 122 is substantially perpendicular to the channels. This enables the detection of parallel running groups.

Fig. 12 shows the employment of multiple P.I.N. diodes 104. The diode array 104 enables a "picture" of the entire length of the microchannel array be detected and displayed at a given time. Summations over time would enable analysis of the relative migration rates of different groups of molecules. Direct input of this information to a computer, utilizing conventional pattern recognition techniques, would allow for patterns of bands or lack of certain band(s) to be identified automatically.

It is also possible to integrate photodetectors such as P.I.N. diodes, phototransistors or charge-coupled imagers (with or without scintillation materials co-deposited) directly into the substrate. The integration of such devices as well as detection circuitry may be performed in a manner similar to that described above in reference to Fig. 2 for depositing metal electrodes, transistors and other circuits. Such photodetectors could be utilized to detect fluorescence of labelled molecules when pumped with external flood light or laser light source of the appropriate wavelength. The integrated radiation detectors can be aligned with the microchannels.

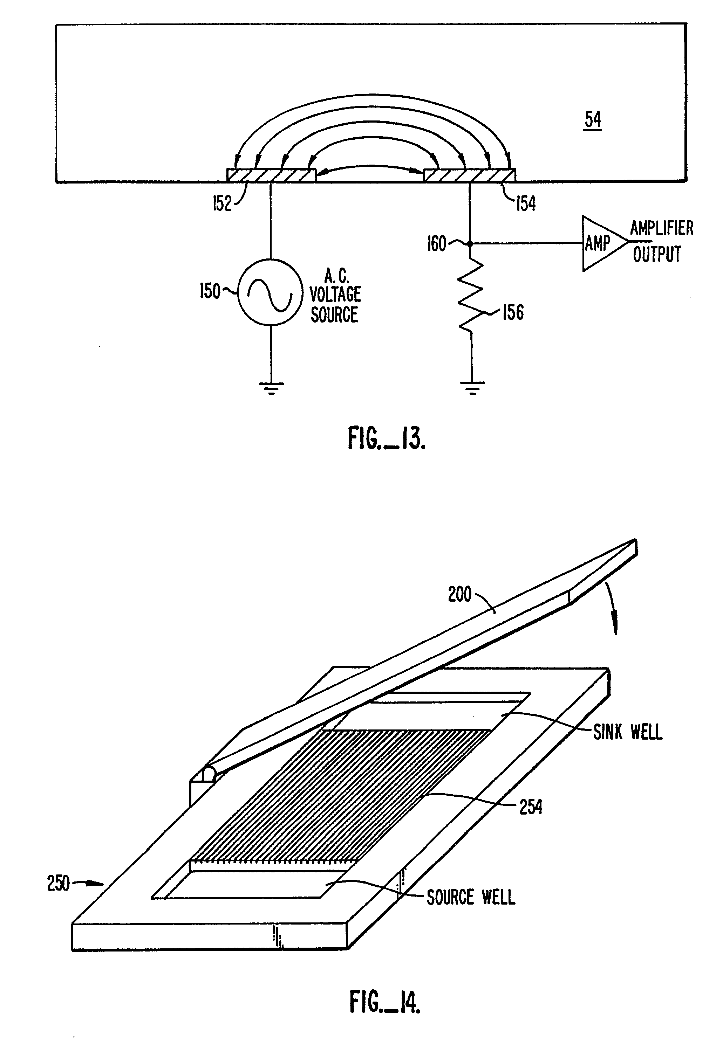

Electrochemical detectors can also be used for detecting local impedance changes as the ions in question are swept past the detectors. Fig. 13 is a partially schematic and partially cross-sectional view of a portion of a microelectrophoretic device to illustrate the invention. Thus, a current is passed by a source 150 to electrode 152 (typically a noble metal such as platinum or iridium) in contact with an electrolyte and sample in a microchannel 54. The current passes through a portion of the electrolyte and sample in the vicinity of electrodes 152, 154 towards electrode 154 and then through resistor 156 to ground. The voltage at node 158 is detected by an amplifier 160 and other circuitry (not shown in Figs 13). Thus if resistor 156 is of a fixed resistance, the voltage at node 160 is a measure of the current passing through the portion of the electrolyte and sample in the vicinity of electrodes 152, 154. Such impedance is an indication of the type of ions or molecules that are being swept past electrodes 152, 154. Since considerable variations in local impedance caused by the changes in concentrations and components of the sample will be encountered, it is likely that the signal detected can be distinguished from noise. Small signal sinusoidal (direct impedance measurement) or Fourier signal analysis techniques can be used to determine the presence of particular components sweeping past the electrodes 152, 154. Direct impedance measurement techniques are described in:

(1) Hause, L., et al, Electrode and Electrolyte Impedance in the Detection of Bacterial Growth, IEEE Transactions on Biomedical Engineering, Vol. BME-28, No. 5, May, 1981

(2) MacDonald, J. R. [ed.], Impedance Spectroscopy, John Wiley and Sons, New York, 1987.

Instead of fabricating the detectors into the substrate as described above, arrays of detectors can be mechanically positioned over the microchannels as shown in Fig. 14. As shown in Fig. 14, detector array 200 may be precisely aligned by mechanical means over and on top of the microchannels 254 of the electrophoretic device 250. This permits array 200 to be removed upon completion of the electrophoretic process. Thus, only device 250 is disposed of upon completion and detector array 200 may be reused in future processes. For the multi-electrode arrays to be used on top of a conventional electrophoretic gel as described above and shown in Figs. 9 and 10; said detectors may be fabricated on the same substrate as the arrays.

Thus, the invention described above makes it possible to provide low-cost clinically applicable DNA sequencers and other instruments with potential for use in research and even in the offices of solo medical practitioners. Various details of implementation and method are merely illustrative of the invention. It will be understood that various changes in such details may be within the scope of the invention which is to be limited only by the appended claims.

**Claims**

1. An electrophoretic device (20, 40, 50) comprising:
a substrate (22, 42, 52) having therein at least one trench (24, 44, 54);
a cover adapted to contact said surface to cover the trench forming an elongate space with the trench, said space being suitable for holding an electrolyte and an electrophoretic sample having one or more components during an electrophoretic process; and
means (28, 48) for applying to the trench an electric field to move the electrolyte and the sample through the trench and to separate the sample into its components.

2. A device as claimed in claim 1, characterized in that said cover has a surface (26a) which contacts the substrate to form the elongate space, said electric field applying means including electrodes on the surface.

3. A device as claimed in claim 1, characterized in that said substrate has a surface and wherein said electric field applying means includes electrodes (48)on or adjacent to the surface of the substrate.

4. A device as claimed in claim 3, characterized in that said electric field applying means further includes transistor means (50).

5. A device as claimed in any of claims 1 to 4, characterized in that said trench has two ends, said device including a source (56) of the electrolyte and the sample at one end of the trench and a sink (58) at the other end, and in that said electric field applying means includes means for applying first voltages to the two ends and to one or more points between the two ends for focusing ions in the sample at or near said point, and for subsequently applying a second set of voltages to the two ends and the points causing the focused ions to move towards the sink.

6. A device as claimed in claim 5, characterized in that said electric field applying means includes a first electrode at the source, a second electrode at the sink and a third electrode at or near said point.

7. A device as claimed in any of claims 1 to 4, characterized in that said device has at least two trenches, said trenches each having two ends, said device including a source (56) of the electrolyte and the sample at one end of both trenches and a sink (58) at the other end. and in that said electric field applying means includes means for applying substantially simultaneously a first set of voltages to the two ends of both trenches and to a point between the two ends of each trench, said points defining therethrough a line transverse to the trenches for focusing ions in the sample at or near said points forming a front of ions or molecules, and for subsequently applying substantially simultaneously a second set of voltages to the two ends and the point, causing the focused ions in the ion front to move towards the sink.

8. A device as claimed in any of claims 1 to 7, characterized in that said trench is such that its dimension in any direction substantially perpendicular to the direction of flow does not exceed substantially 100 microns.

9. A device as claimed in any of claims 1 to 8, characterized in that said substrate defines therein two or more trenches (54) substantially parallel to one another.

10. A device as claimed in any of claims 1 to 8, characterized in that said substrate defines therein two or more trenches (54') in substantially radial directions with respect to a center point.

11. A device as claimed in any of claims 1 to 10, characterzed by further comprising one or more detectors for detecting the presence of one or more components.

12. A device as claimed in claim 11, characterized in that said cover has a second surface which contacts the surface of the substrate to form the elongate space, said detector forming a part of the cover on or near the second surface.

13. A device as claimed in claim 11, characterized in that said detector forms a part of the substrate on or adjacent to the surface.

14. A device as claimed in claim 11, characterized in that said detectors are attached to a support adapted to be placed adjacent to or in the trench.

15. A device as claimed in claim 11, said trench having two ends, characterized in that said detectors comprise:

at least two electrodes adjacent to each other, said electrodes being at different distances from the one end of the trench;

means for passing a current between said two electrodes through the portion of the electrolyte and any components present in the vicinity of the two electrodes; and

means for measuring the current to detect the components present in the vicinity of the two electrodes.

16. A device as claimed in claim 15, characterized in that said two electrodes are elongate and arranged transverse to the trench.

17. An electrophoretic device (20, 40, 50) characterized by comprising:

a semiconductor substrate (22, 42, 52) defining therein at least one trench (24, 44, 54) suitable for holding an electrolyte and an electrophoretic sample having one or more components during an electrophoretic process;

said substrate having a portion defining means for applying to the trench an electric field to move the electrolyte through the trench and to separate the sample into its components.

18. A device as claimed in any of claims 1 to 17, characterized in that the trench has a serpentine or winding shape, or the shape or a spiral.

19. An electrophoretic device characterized by comprising:

a medium suitable for passage of a sample along a predetermined direction between a source (56) and a sink (58) during an electrophoretic process, said sample having one or more components; and

means for applying to the medium electric fields at the source and sink and at at least one point between the source and sink to move the components along said direction and to separate the sample into its components.

20. A device as claimed in claim 19, characterized in that said electric field applying means comprises electrodes in or near the medium.

21. A device as claimed in claim 19 or 20, characterized in that said applying means comprises a plurality of elongate electrodes arranged transverse to the direction for applying voltages to the source and sink and points between the source and sink.

22. A device as claimed in any of claims 19 to 21, characterized by further comprising a plurality of detectors for detecting the components at points between the source and sink.

23. A device as claimed in claim 22, characterized in that said detectors comprise:

at least two electrodes adjacent to each other;

means for passing a current between said two electrodes through the portion of the medium and any components present in the vicinity of the two electrodes; and

means for measuring the current to detect the components present in the vicinity of the two electrodes.

24. A device as claimed in claim 23, characterized in tha said two electrodes are elongate and arranged transverse to the direction.

25. A device as claimed in any of claims 22 to 24, characterized in that at least one of the components of said sample has been labelled with a fluorescent material, said detectors being suitable for detected light emitted by said material.

26. A device as claimed in any of claims 22 to 25, characterized in that said detector is a P.I.N. diode type detector (122, 124), a phototransistor or charge-coupled imager.

27. An electrophoretic method employing a device, said device including (a) a medium suitable for passage of a sample along a predetermined direction between a source and a sink during an electrophoretic process. said sample having one or more components; and (b) a source electrode and a sink electrode and at least a third electrode arranged transverse to the direction for applying voltages to the source and sink and points between the source and sink, wherein a third electrode is adjacent to the source, and (c) means for applying voltages to the electrodes, said method comprising the following steps:

(i) applying voltages to the electrodes so that the third electrode is at a higher or lower potential than the source and sink electrodes to attract charged sample components to the vicinity of the third electrode: and

(ii) applying voltages to the electrodes so that the sample components in the vicinity of the third electrode move towards the sink.

28. A method as claimed in claim 27, characterized by further comprising applying to the third electrode during step (ii) a voltage of polarity opposite to that applied to the third electrode during step (i) to accelerate a portion of the sample components in the vicinity of the third electrode toward the sink and the remaining portion toward the source.

29. An electrophoretic method employing a device, said device including (a) a medium suitable for passage of a sample along a predetermined direction between a source and a sink during an electrophoretic process, said sample having one or more components; and (b) a plurality of electrodes arranged transverse to the direction for applying voltages to the source and sink and points between the source and sink, and (c) means for applying voltages to the electrodes, said method comprising the following steps:

(i) applying voltages to the electrodes so that for a first group of three adjacent electrodes, the electrode closest to the source defining the first electrode is at a higher or lower potential than the remaining electrodes in the group to attract a component of the sample towards said first electrode;

(ii) changing the voltage applied to the electrode immediately adjacent the first electrode and downstream in said predetermined direction defining the second electrode so that the potential of the second electrode tends to follow that of the first during step (i) to attract the component attracted to the first electrode during the step (i) towards the second electrode;

wherein the voltage applied to the electrode immediately adjacent the second electrode and downstream in said predetermined direction defining the third electrode is at such potential that diffusion of the component downstream in said direction is reduced.

30. A method as claimed in claim 29, characterized by further comprising a step (iv) of changing, at a predetermined time after step (i), the voltage applied to the first electrode to prevent the component from diffusing back towards the first electrode, thereby causing said component to travel from the vicinity of the first electrode towards the vicinity of the second electrode and towards the sink.

31. A method as claimed in claim 30, characterized in that said steps (i) through (iv) are repeated for one or more groups of electrodes adjacent to and downstream from said first group along the predetermined direction, causing the component to travel further towards the sink.

32. A method as claimed in claim 30 or 31. characterized in that the voltages are applied to the electrodes so that the number of electrodes in the groups decreases monotonically as the component travels towards the sink.

33. A method as claimed in any of claims 30 to 32, characterized in that the voltages are applied so that the spacing between groups of electrodes for which the steps (i) through (iv) are repeated is selected to cause only those components with desired mobilities to move toward the sink.

34. A method as claimed in any of claims 30 to 33, characterized in that the steps (i) through (iv) are repeated at a frequency selected.

35. A method as claimed in any of claims 30 to 34, further comprising a step (v) of applying voltages to the electrodes so that the voltage pattern resulting from steps (i) through (iv) is repeated for a second group of three adjacent electrodes wherein the second group of electrodes is spatially shifted from the first group by one or more electrodes.

COVER PLATE — 26

26a

METAL TRACES
(ELECTRODES AND INTERCONNECT)

28

— 20

INSULATOR ON SILICON

24

SILICON SUBSTRATE

22

**FIG._I.**

COVER PLATE — 46

MOSFET
GATE 50

— 40

44

52

SOURCE

DRAIN

n+ DOPING

METAL
ELECTRODE

48

SILICON
DIOXIDE

SILICON SUBSTRATE
(p-TYPE DOPING)

42

**FIG._2.**

FIG._3A.

SOURCE WELL AND ELECTRODE

STARTING GATE ELECTRODE

SINK WELL AND ELECTRODE

MICROCHANNEL

SUBSTRATE

FIG._3B.

SOURCE
WELL AND
ELECTRODE

STARTING
GATE
ELECTRODE

SINK
WELL AND
ELECTRODE

MICROCHANNELS

FIG._3C.

EP 0 376 611 A2

SOURCE
ELECTRODE
0 VOLTS

STARTING
GATE
ELECTRODE
0 VOLTS

SINK
ELECTRODE
0 VOLTS

60

54

56

58

**FIG._4A.**

0 VOLTS

SMALL
POSITIVE
VOLTAGE

0 VOLTS

60

54

56

58

**FIG._4B.**

0 VOLTS

LEFT AT SMALL
POSITIVE VOLTAGE
OR 0 VOLTS

LARGE
POSITIVE
VOLTAGE

60

54

56

58

**FIG._4C.**

0 VOLTS

SMALL
NEGATIVE
VOLTAGE

LARGE
POSITIVE
VOLTAGE

62

60

64

54

56

58

**FIG._4D.**

FIG._5.

FIG._6A.

CLOCK 3
CLOCK 2
CLOCK 1

CLOCK LINES

COVER PLATE

METAL ELECTRODES

e1  e2  e3  e4  e5  e6  e7  e8  e9  e10

SOURCE WELL

SILICON SUBSTRATE

FIG._6B.

t = t1
CLOCK 1 = -V
CLOCK 2 = 0
CLOCK 3 = 0

t = t2
CLOCK 1 = -V
CLOCK 2 = -V
CLOCK 3 = 0

t = t3
CLOCK 1 = -V/2
CLOCK 2 = -V
CLOCK 3 = 0

t = t4
CLOCK 1 = 0
CLOCK 2 = -V
CLOCK 3 = 0

t = t5   CLOCK 1 = 0
CLOCK 2 = -V   CLOCK 3 = -V

t = t6   CLOCK 1 = 0
CLOCK 2 = -V/2   CLOCK 3 = -V

EP 0 376 611 A2

FIG._7.

FIG._8A.

OUTPUTS TO ELECTRODES

MEMORY

ADDRESS LINES

COUNTER

CLOCK OSCILLATOR

FIG.__8B.

SOURCE
WELL
ELECTRODE

"STARTING GATE" ELECTRODE

SINK WELL
ELECTRODE

**FIG._9.**

SOURCE
WELL
ELECTRODE

STARTING GATE ELECTRODE
MULTIPLE ELECTRODES

SINK WELL
ELECTRODE

SWITCHING CONTROL CIRCUITRY

**FIG._10.**

PIN DIODE 122

MICRO-
CHANNELS
54

FIG._II.

PIN DIODES 124    124    124

MICRO-
CHANNELS
54

FIG._I2.

FIG._13.

FIG._14.